(19) Europäisches Patentamt
European Patent Office
Office européen des brevets

(11) Veröffentlichungsnummer: **0 042 090**
**B1**

(12) # EUROPÄISCHE PATENTSCHRIFT

(45) Veröffentlichungstag der Patentschrift: **13.04.83**

(51) Int. Cl.³: **C 09 B 67/22,** D 06 P 1/16, C 09 B 57/14, C 09 B 57/02, C 09 B 57/00

(21) Anmeldenummer: **81104160.7**

(22) Anmeldetag: **01.06.81**

(54) **Farbstoffpräparation sowie deren Verwendung als Warn- und Signalfarbe.**

(30) Priorität: **12.06.80 DE 3021947**

(43) Veröffentlichungstag der Anmeldung: **23.12.81 Patentblatt 81/51**

(45) Bekanntmachung des Hinweises auf die Patenterteilung: **13.04.83 Patentblatt 83/15**

(84) Benannte Vertragsstaaten: **CH DE FR GB IT LI**

(56) Entgegenhaltungen:
**EP-A-0 026 463**
**DE-A-1 098 125**
**DE-A-2 406 220**
**FR-A-1 590 506**
**FR-A-2 042 045**
**FR-A-2 205 556**
**FR-A-2 316 293**
**GB-A-1 329 043**
**US-A-4 005 111**

(73) Patentinhaber: **BAYER AG, Zentralbereich Patente, Marken und Lizenzen, D-5090 Leverkusen 1, Bayerwerk (DE)**

(72) Erfinder: **Wiegner, Dieter, Nothauser Feld 4, D-5068 Odenthal (DE)**
Erfinder: **Harnisch, Horst, Dr., Heinenbusch 4, D-5203 Much (DE)**
Erfinder: **Raue, Roderich, Dr., Berta-von-Suttner-Strasse 48, D-5090 Leverkusen (DE)**

**EP 0 042 090 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Farbstoffpräparation sowie deren Verwendung als Warn- und Signalfarbe

Gegenstand der Erfindung sind Präparationen von Dispersionsfarbstoffen mit einem fluoreszierenden Orange-Rot-Farbton gemäß der vom Ausschuß für Lieferbedingungen und Gütesicherung beim deutschen Normanausschuß festgelegten Norm RAL 2005 und einem Leuchtdichtefaktor $\beta \geqq 0.45$ gemäß DIN 16 954, sowie deren Verwendung zum Färben von Textilmaterialien zur Herstellung von Warnschutzbekleidung und Warnzeichen.

Warnkleidung, wie Warnwesten, -jacken und -hosen, sowie Warnzeichen, wie Armbinden, Gurte und Mützenbezüge, die jene Normen erfüllen, wurden bisher praktisch ausschließlich durch direktes Aufbringen einer Polyamid- oder Polyurethanbeschichtung, in welche fluoreszierende Pigmente eingebettet sind, auf Baumwollgewebe hergestellt.

Diese Bekleidung weist jedoch den Nachteil auf, daß die Beschichtungen nicht genügend abriebfest sind und die darin enthaltenen Pigmente nur eine geringe Lichtechtheit aufweisen.

Versuche, fluoreszierende Farbstoffe mit jenem normgerechten Orange-Rot-Farbton direkt auf die Textilfasern zu bringen, waren bislang wenig erforderlich, da die hierfür verwendeten Farbstoffe nicht die geforderte hohe Leuchtkraft und/oder ausreichende Gebrauchsechtheiten ergaben und Mischungen von geeigneten Fluoreszenz-Farbstoffen eine Fluoreszenzminderung oder -löschung zeigten.

Es wurde nun gefunden, daß man hydrophobe Fasermaterialien direkt, d. h. ohne Verwendung von Bindern, Beschichtungsmittel etc., in dem gewünschten Farbton und entsprechend den geforderten Normwerten färben kann, wenn man Farbstoffpräparationen verwendet, die eine Mischung eines Gelbfarbstoffs der Formel

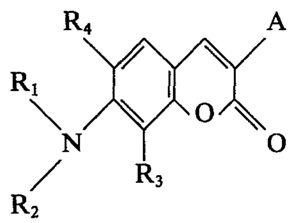

(Ia)

worin

$R_1$ und $R_2$ $C_1-C_4$-Alkyl oder Phenyl-$C_1-C_3$-alkyl und
$R_3$ und $R_4$ einzeln Wasserstoff bedeuten,
$R_1$ und $R_2$ gemeinsam einen Rest der Formel $-(CH_2)_2-Z-(CH_2)_2-$
$R_1$ mit $R_4$ einen Rest der Formel $-(CH_2)_2-$, $-(CH_2)_3-$ oder $-C(CH_3)_2-CH_2-CH(CH_3)-$ und
$R_2$ mit $R_3$ einen Rest der Formel $-(CH_2)_3-$

bilden können, wobei

Z für O, NH, $N-CH_3$, $CH_2$ oder eine direkte Bindung und
A für einen Rest der Benzoxazol-, Benzimidazol-, Benzthiazol-, Chinazolon- oder Thiadiazolreihe

steht,
oder der Formel

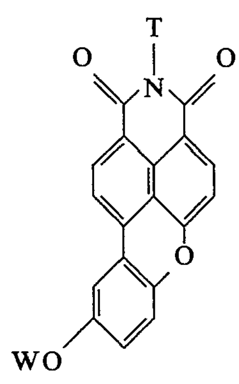

(Ib)

worin

W für $C_1$—$C_2$-Alkyl und
T für gegebenenfalls durch OH, $C_1$—$C_4$-Alkoxy, Phenyl oder Cl substituiertes $C_1$—$C_6$-Alkyl stehen,

mit einem Rot-Farbstoff der Formel

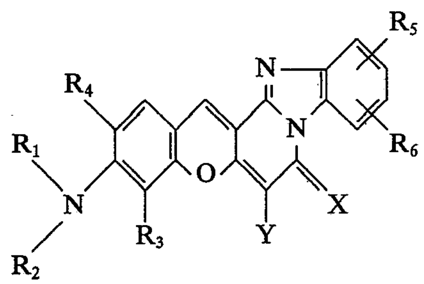

(II)

worin

$R_1$, $R_2$, $R_3$ und $R_4$ die obengenannte Bedeutung haben,
$R_5$ und $R_6$ für Wasserstoff, Chlor, $C_1-C_4$-Alkyl oder $C_1-C_2$-Alkoxy,
X für NH oder O und
Y für CN oder $CONH_2$ stehen,

enthalten.

Die Farbstoffe der Formeln Ia, Ib und II sind durchweg bekannt und beispielsweise in der folgenden Patentliteratur beschrieben: DE-A-1 098 125, DE-A-1 569 761, DE-A-1 770 818, DE-A-2 005 933, DE-A-2 030 507, DE-A-2 406 220 und 2 529 434.

Die heterocyclischen Reste A in Formel (Ia) können übliche Substituenten enthalten, z. B. $C_1-C_4$-Alkyl, $C_1-C_4$-Alkoxy, Chlor, $C_1-C_2$-Alkoxycarbonyl, $C_1-C_4$-Alkylsulfonyl, Cyclohexyl, Phenyl oder Phenyl-$C_1-C_3$-alkyl.

Bevorzugt sind Farbstoffpräparationen, die Mischungen von Farbstoffen der Formeln Ia und II, worin

$R_1$ und $R_2$ $C_1-C_4$-Alkyl und
A einen Rest der Formel

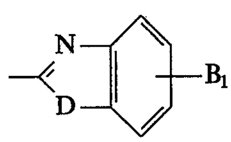

oder

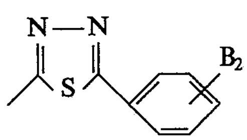

worin

$B_1$ = H, Cl, $CH_3$, $CH_3O$ oder $C_2H_5O$
$B_2$ = H, $CH_3$ oder Cl
D = O, S, NH, N$-C_1-C_4$-Alkyl oder NHCO (CO am Aromaten),
X = NH oder O
Y = CN und
$R_3$, $R_4$, $R_5$ und $R_6$ = Wasserstoff bedeuten,

enthalten.

Von besonderer technischer Bedeutung sind Farbstoffpräparationen, die eine Mischung eines Farbstoffs der Formel

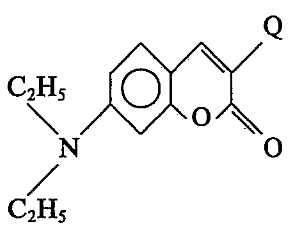

(III)

worin

Q für einen Rest der Formeln

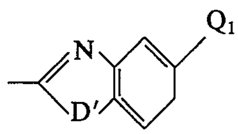 oder 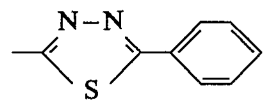

$Q^1$ für H, $CH_3$ oder Cl und

D' für O, NH oder NHCO (CO an Aromaten) stehen, mit einem Farbstoff der Formel

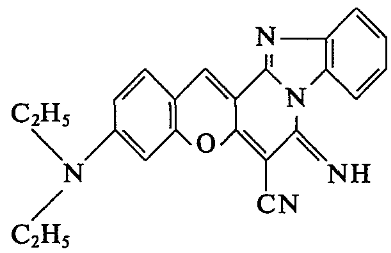 (IV)

enthalten.

Ganz besonders bevorzugt sind Farbstoffkomponenten der Formel III mit D' = O.

Das zur Einstellung des gewünschten Farbtons erforderliche Mischungsverhältnis der Gelb- und Rotfarbstoffe kann in üblicher Weise durch eine Farbrezepturberechnung ermittelt werden.

Die neuen Farbstoffpräparate können neben der erfindungswesentlichen Farbstoffmischung übliche Hilfsmittel, wie Dispergier- und Streckmittel, enthalten.

Sie eignen sich zum Färben und Bedrucken der üblichen hydrophoben Fasern, wie Celluloseester-, synthetische Polyamid- und insbesondere Polyesterfasern nach bekannten Methoden, vorzugsweise nach dem Hochtemperaturverfahren bei 110–140° C.

Der gewünschte Farbton kann selbstverständlich auch dadurch erzeugt werden, daß man die Einzelfarbstoffe im Färbebad miteinander vermischt.

## Beispiel 1

Eine Polyesterwirkware wird bei 40° C in ein Färbebad eingebracht, das bei einem Flottenverhältnis von 1 : 20 und einem pH-Wert von 5 1 g/l eines handelsüblichen anionischen Dispergiermittels und 3% einer feinverteilten 1 : 1-Mischung der Farbstoffe der Formeln

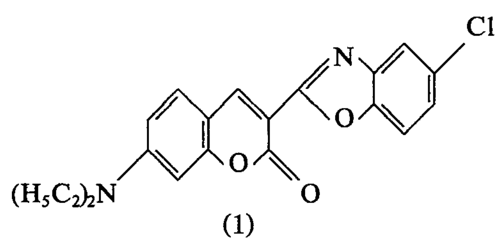 (10%ig, mit üblichen Stellmitteln)

(1)

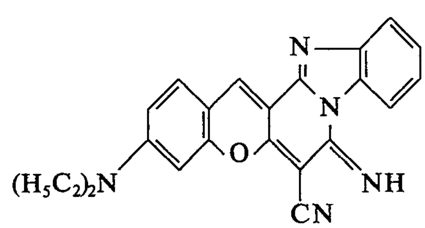 (20%ig, mit üblichen Stellmitteln)

(2)

enthält. Man färbt 60 Min. bei 130°C und unterwirft die erhaltene Färbung einer üblichen alkalisch-reduktiven Nachbehandlung.

Die so gefärbte Wirkware entspricht dem Farbton RAL 2005 und hat einen Leuchtdichtefaktor $\beta = 0.47$.

Verfährt man wie vorstehend angegeben, ersetzt jedoch den Gelbfarbstoff (1) durch einen anderen Farbstoff der Formel Ia entsprechend seinem Färbeäquivalent (definiert nach DIN 53 204), so erhält man ebenfalls normgerechte Leuchtorangefärbungen mit den angegebenen Leuchtdichtefaktoren:

Mischungen des Farbstoffs (2) mit Gelbfarbstoffen der Formel Ia

| Beispiel | $R_1$ | $R_2$ | $R_3$ | $R_4$ | A | $\beta$ |
|---|---|---|---|---|---|---|
| 2 | $C_2H_5$ | $C_2H_5$ | H | H | 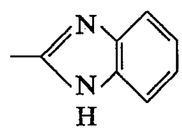 | 0.47 |
| 3 | $C_2H_5$ | $C_2H_5$ | H | H | 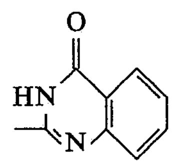 | 0.45 |
| 4 | $C_2H_5$ | $C_2H_5$ | H | H | 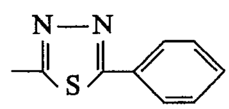 | 0.47 |
| 5 | $C_2H_5$ | $C_2H_5$ | H | H | 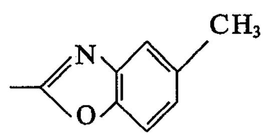 | 0.46 |
| 6 | n-$C_4H_9$ | n-$C_4H_9$ | H | H | 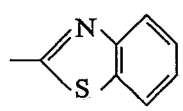 | 0.45 |

Beispiel 7

Man verfährt, wie in Beispiel 1 angegeben, ersetzt jedoch den Gelbfarbstoff der Formel (1) durch den Farbstoff der Formel

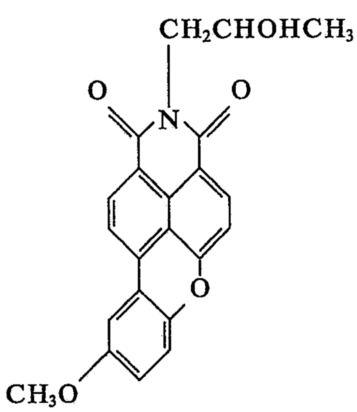

(3)

entsprechend seinem Färbeäquivalent (definiert nach DIN 53 204), so erhält man ebenfalls eine Färbung im gewünschten Signalorangeton mit einem $\beta$-Wert = 0,45.

**Patentansprüche**

1. Farbstoffpräparation von fluoreszierenden Dispersionsfarbstoffen mit einem Leuchtorange-Farbton gemäß der vom Ausschuß für Lieferbedingungen und Gütesicherung beim deutschen Normenausschuß festgelegten Norm RAL 2005 und einem Leuchtdichtefaktor $\beta \geqq 0.45$ gemäß DIN 16 954, enthaltend eine Mischung eines Gelbfarbstoffs der Formel

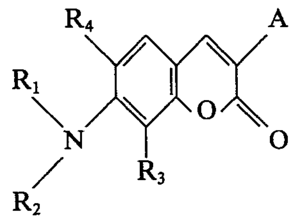

(Ia)

worin

$R_1$ und $R_2$ $C_1-C_4$-Alkyl oder Phenyl-$C_1-C_3$-alkyl und
$R_3$ und $R_4$ einzeln Wasserstoff bedeuten,
$R_1$ und $R_2$ gemeinsam einen Rest der Formel $-(CH_2)_2-Z-(CH_2)_2-$,
$R_1$ mit $R_4$ einen Rest der Formel $-(CH_2)_2-$, $-(CH_2)_3-$ oder $-C(CH_3)_2-CH_2-CH(CH_3)-$ und
$R_2$ und $R_3$ einen Rest der Formel $-(CH_2)_3-$

bilden können, wobei

Z für O, NH, $NCH_3$, $CH_2$ oder eine direkte Bindung,
A für einen Rest der Benzoxazol-, Benzimidazol-, Benzthiazol-, Chinazolon- oder Thiadiazolreihe

steht,
oder eines Gelbfarbstoffes der Formel

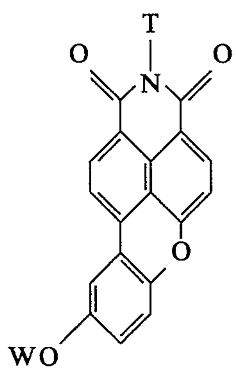

(Ib)

worin

W für $C_1-C_2$-Alkyl,
T für gegebenenfalls durch OH, $C_1-C_4$-Alkoxy, Phenyl oder Cl substituiertes $C_1-C_6$-Alkyl stehen,

mit einem Rot-Farbstoff der Formel

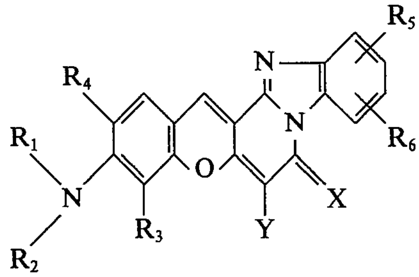

(II)

worin

$R_1$, $R_2$, $R_3$ und $R_4$ die obengenannte Bedeutung haben,
$R_5$ und $R_6$ für Wasserstoff, Chlor, $C_1$—$C_4$-Alkyl oder $C_1$—$C_2$-Alkoxy,
X für NH oder O und
Y für CN oder $CONH_2$ stehen.

2. Farbstoffpräparationen gemäß Anspruch 1, enthaltend eine Mischung eines Farbstoffs der Formel

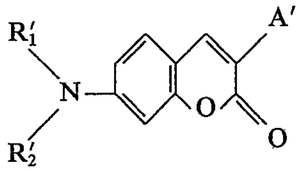

worin

$R'_1$ und $R'_2$ für $C_1$—$C_4$-Alkyl,
A' für einen Rest der Formel

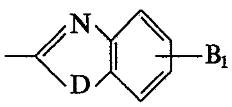

oder

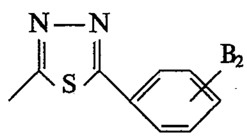

$B_1$ für H, Cl, $CH_3$, $CH_3O$ oder $C_2H_5-O$
$B_2$ für H, $CH_3$ oder Cl und
D für O, S, NH, N—$C_1$—$C_4$-Alkyl oder NHCO (CO am Aromaten)

stehen,
mit einem Farbstoff der Formel

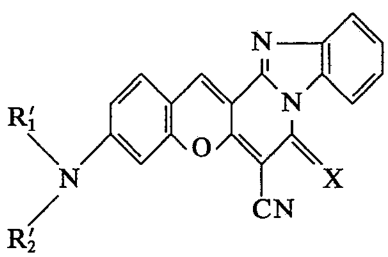

worin

$R'_1$ und $R'_2$ die obengenannte Bedeutung haben und
X für NH oder O steht.

3. Farbstoffpräparationen gemäß Anspruch 1, enthaltend eine Mischung eines Farbstoffs der Formel

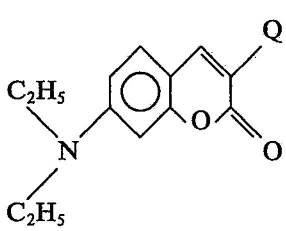

worin

Q für einen Rest der Formel

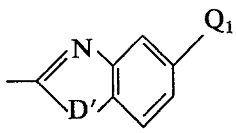

oder

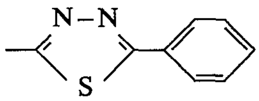

$Q^1$ für H, $CH_3$ oder Cl und
D' für O, NH oder NHCO (CO an Aromaten)

stehen, mit einem Farbstoff der Formel

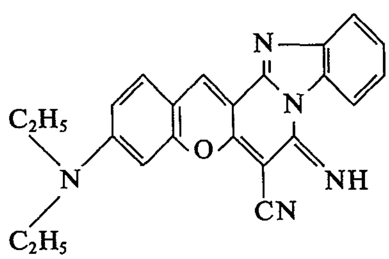

4. Farbstoffpräparationen gemäß Anspruch 3, worin D' für O steht.
5. Farbstoffpräparationen gemäß Anspruch 1, enthaltend eine Mischung eines Farbstoffs der Formel

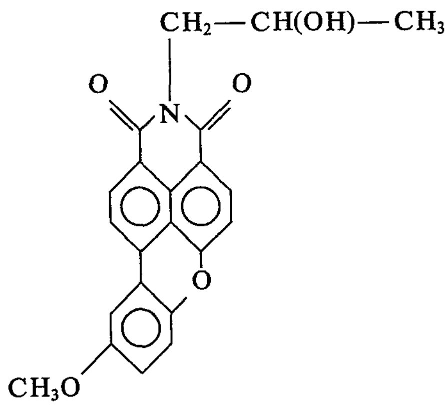

mit einem Rotfarbstoff der Formel

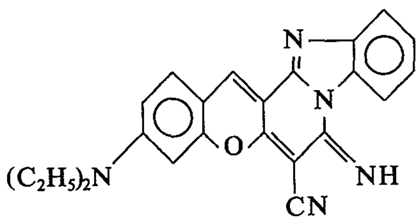

6. Verwendung der Farbstoffpräparationen gemäß Anspruch 1 zum Färben oder Bedrucken von Warnkleidung und Warnzeichen.

7. Verfahren zum Färben oder Bedrucken von Warnkleidung und Warnzeichen, dadurch gekennzeichnet, daß man Färbebäder bzw. Druckpasten verwendet, die eine Mischung von Farbstoffen gemäß Anspruch 1 enthalten.

**Claims**

1. Dyestuff preparation of fluorescent disperse dyestuffs with a luminous orange colour shade according to the Standard RAL 2005 laid down by the German Standards Sub-Committee for Terms of Delivery and Quality Assurance, and a luminance factor $\beta \geqq 0.45$, according to DIN 16 954, containing a mixture of a yellow dyestuff of the formula

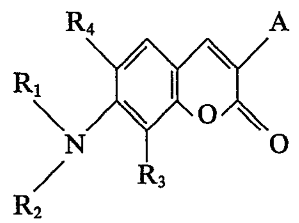

(Ia)

wherein

$R_1$ and $R_2$ denote $C_1-C_4$-alkyl or phenyl-$C_1-C_3$-alkyl and
$R_3$ and $R_4$ individually denote hydrogen, or
$R_1$ and $R_2$ together can form a radical of the formula
$-(CH_2)_2-Z-(CH_2)_2-$ or
$R_1$ and $R_4$ can form a radical of the formula $-(CH_2)_2-$, $-(CH_2)_3-$ or
$-C(CH_3)_2-CH_2-CH(CH_3)-$ and
$R_2$ and $R_3$ can form a radical of the formula $-(CH_2)_3-$

wherein

Z represents O, NH, $NCH_3$, $CH_2$ or a direct bond, and
A represents a radical of the benzoxazole, benzimidazole, benzothiazole, quinazolone or thiadiazole series,

or a yellow dyestuff of the formula

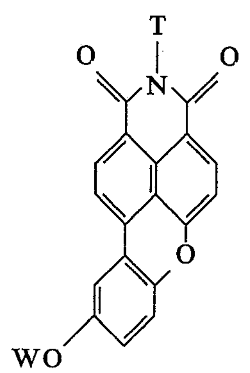

(Ib)

wherein

W represents $C_1$—$C_2$-alkyl and
T represents $C_1$—$C_6$-alkyl which is optionally substituted by OH, $C_1$—$C_4$-alkoxy, phenyl or Cl,

and a red dyestuff of the formula

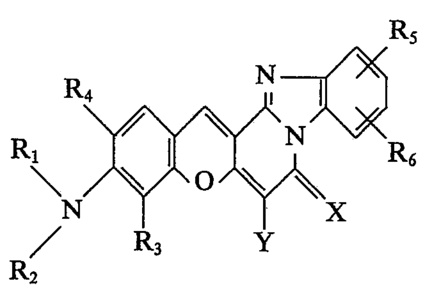

(II)

wherein

$R_1$, $R_2$, $R_3$ and $R_4$ have the abovementioned meaning,
$R_5$ and $R_6$ represent hydrogen, chlorine, $C_1$—$C_4$-alkyl oder $C_1$—$C_2$-alkoxy,
X represents NH or O and
Y represents CN or $CONH_2$.

2. Dyestuff preparations according to Claim 1, containing a mixture of a dyestuff of the formula

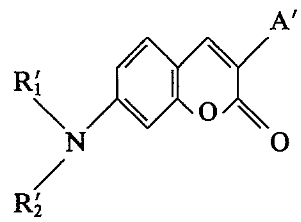

wherein

$R_1'$ and $R_2'$ represent $C_1$—$C_4$-alkyl,
A' represents a radical of the formula

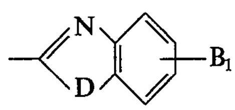 or 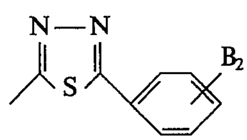

$B_1$ represents H, Cl, $CH_3$, $CH_3O$ or $C_2H_5-O$,
$B_2$ represents H, $CH_3$ or Cl and
D represents O, S, NH, N$-C_1$—$C_4$-alkyl or NHCO (CO on the aromatic nucleus),

and a dyestuff of the formula

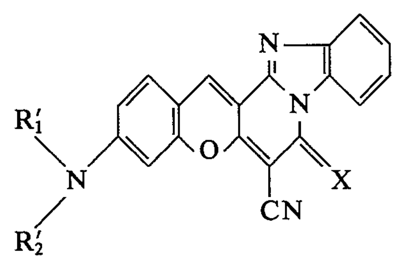

wherein

$R_1'$ and $R_2'$ have the abovementioned neaning and
X represents NH or O.

3. Dyestuff preparations according to Claim 1, containing a mixture of a dyestuff of the formula

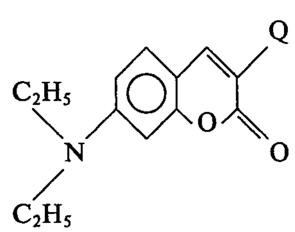

wherein

Q represents a radical of the formula

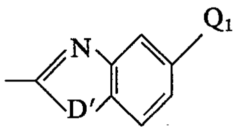

or

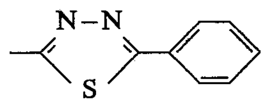

$Q^1$ represents H, $CH_3$ or Cl and
D′ represents O, NH or NHCO (CO on the aromatic nucleus),

and a dyestuff of the formula

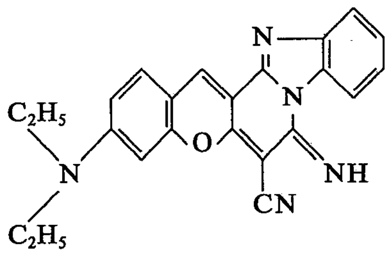

4. Dyestuff preparations according to Claim 3, wherein D′ represents O.
5. Dyestuff preparations according to Claim 1, containing a mixture of a dyestuff of the formula

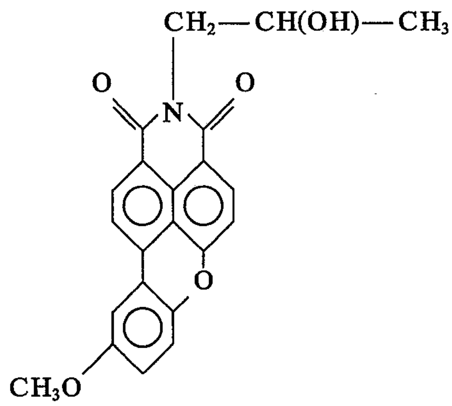

and a red dyestuff of the formula

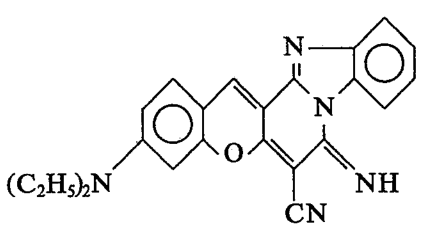

6. Use of the dyestuff preparations according to Claim 1 for dyeing or printing warning clothing and warning signs.
7. Process for dyeing or printing warning clothing and warning signs, characterised in that dyebaths or printing pastes which contain a mixture of dyestuffs according to Claim 1 are used.

**Revendications**

1. Préparation à base de colorants dispersés fluorescents de teinte orangée lumineuse conformément à la norme RAL 2005 établie par la Commission des conditions de livraison et de la

garantie de qualité auprès de la Commission des Normes Allemandes et d'un facteur de luminance $\beta \geqq 0{,}45$ conformément à la norme DIN 16 954, contenant un mélange d'un colorant jaune de formule

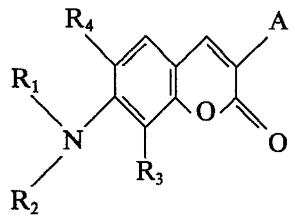

(Ia)

dans laquelle

$R_1$ et $R_2$ représentent un groupe alkyle en $C_1$ à $C_4$ ou phényl-(alkyle en $C_1$ à $C_3$) et $R_3$ et $R_4$ représentent individuellement de l'hydrogène,
$R_1$ et $R_2$ forment en commun un reste de formule $-(CH_2)_2-Z-(CH_2)_2-$,
$R_1$ peut former avec $R_4$ un reste de formule $-(CH_2)_2-$, $-(CH_2)_3-$ ou $-C(CH_3)_2-CH_2-CH(CH_3)-$ et
$R_2$ et $R_3$ peuvent former un reste de formule $-(CH_2)_3-$,

Z représentant O, NH, $NCH_3$, $CH_2$ ou une liaison directe,
A représente un reste de la série du benzoxazole, du benzimidazole, du benzothiazole, de la quinazolone ou du thiadiazole,

ou d'un colorant jaune de formule

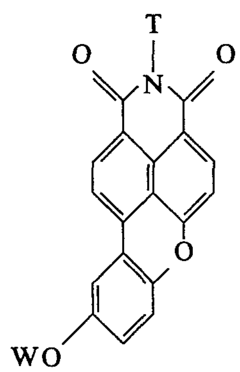

(Ib)

dans laquelle

W est un groupe alkyle en $C_1$ ou $C_2$,
T représente un groupe alkyle en $C_1$ à $C_6$ éventuellement substitué par un radical OH, alkoxy en $C_1$ à $C_4$, phényle ou Cl,

avec un colorant rouge de formule

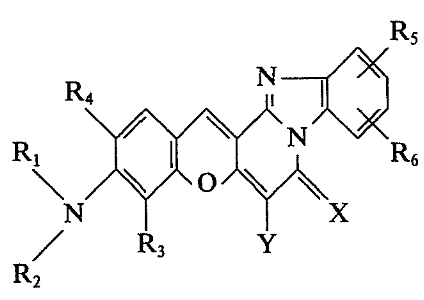

(II)

dans laquelle

$R_1$, $R_2$, $R_3$ et $R_4$ ont les définitions données ci-dessus,

$R_5$ et $R_6$ représentent de l'hydrogène, du chlore, un groupe alkyle en $C_1$ à $C_4$ ou alkoxy en $C_1$ ou $C_2$
X  représente NH ou O et
Y  représente CN ou $CONH_2$.

2. Préparations de colorants suivant la revendication 1, contenant un mélange d'un colorant de formule

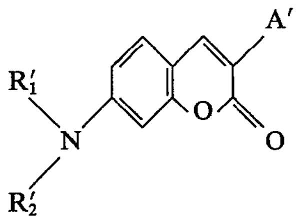

dans laquelle

$R'_1$ et $R'_2$ représentent un groupe alkyle en $C_1$ à $C_4$,
A'  est un reste de formule

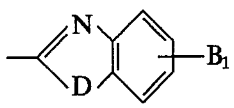

ou

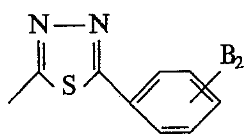

où
$B_1$  représente H, Cl, $CH_3$, $CH_3O$ ou $C_2H_5-O$,
$B_2$  représente H, $CH_3$ ou Cl et
D  représente O, S, NH, N—(alkyle en $C_1$ à $C_4$) ou NHCO (CO lié au noyau aromatique),

avec un colorant de formule

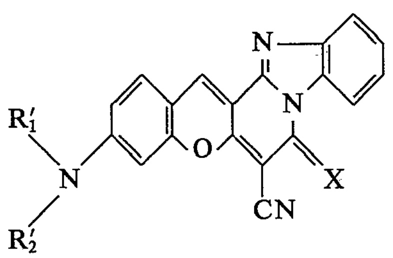

dans laquelle

$R'_1$ et $R'_2$ ont la définition donnée ci-dessus et
X  représente NH ou O.

3. Préparations de colorants suivant la revendication 1, contenant un mélange d'un colorant de formule

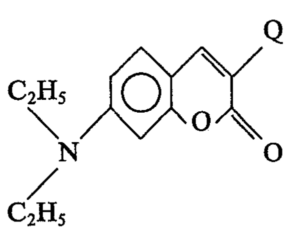

dans laquelle

Q est un reste de formule

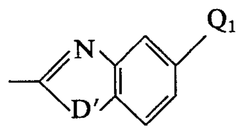

ou

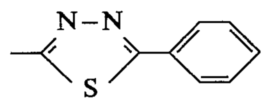

$Q^1$ représente H, $CH_3$ ou Cl et
D' représente O, NH ou NHCO (CO lié au noyau aromatique),

avec un colorant de formule

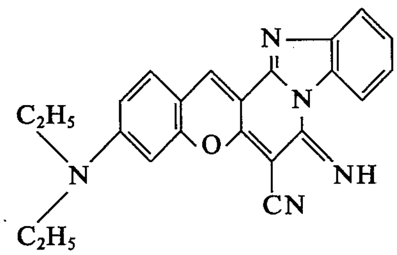

4. Préparations de colorants suivant la revendication 3, dans lesquels D' représente O.

5. Préparations de colorants suivant la revendication 1, contenant un mélange d'un colorant de formule

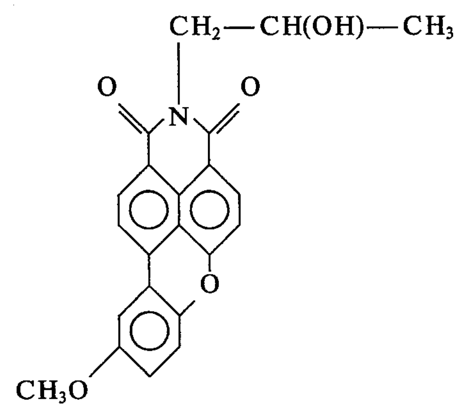

avec un colorant rouge de formule

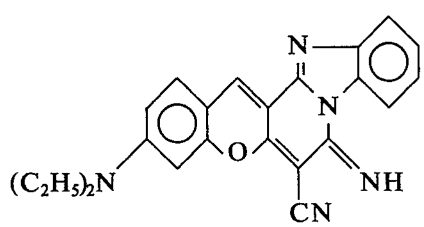

6. Utilisation de préparations de colorants suivant la revendication 1 pour la teinture ou l'impression d'un vêtement avertisseur et de signes avertisseurs.

7. Procédé de teinture et d'impression d'un vêtement avertisseur et de signes avertisseurs, caractérisé en ce qu'on utilise des bains de teinture ou des pâtes d'impression qui contiennent un mélange de colorants suivant la revendication 1.